# EUROPÄISCHE PATENTANMELDUNG

(11) **EP 1 826 257 A1**
(43) Veröffentlichungstag der Anmeldung: **29.08.2007**
(21) Anmeldenummer: 06110377.6
(22) Anmeldetag: 24.02.2006
(51) Int. Cl.: C09K 3/14

(54) **Nano-funktionelles Schleifmittel**

(71) Anmelder: sia Abrasives Industries AG, 8501 Frauenfeld (CH)
(72) Erfinder: Jentgens, Christian, 8360Wallenwil (CH)
(74) Vertreter: Hepp, Dieter

(57) **Zusammenfassung**

Die vorliegende Erfindung betrifft ein Schleifmittel, umfassend als oberste Deckschicht eine nanofunktionelle Beschichtung. Ein derartiges Schleifmittel ist insbesondere zur Oberflächenbearbeitung von Werkstoffen wie Holz, Lacken, Metall oder Kunststoff geeignet, da die nanofunktionelle Beschichtung die hierbei anfallende grosse Menge an Schleifstaub effizient abweist.

## Beschreibung

Die vorliegende Erfindung betrifft ein Schleifmittel mit einer nanofunktionellen Beschichtung.

Es ist bekannt, dass die Bearbeitung der Oberflächen von Werkstoffen aus Holz, Lack, niederschmelzenden, kurzspanigen Metallen oder bestimmten thermoplastischen oder zähelastischen Kunststoffen deswegen schwierig ist, weil bei diesem Vorgang ein signifikanter Anteil an Schleifrückständen wie Spänen oder allgemein Schleifstaub genannt erzeugt wird. Dieser Schleifstaub lagert sich auf dem Schleifmittel entweder durch elektrostatische Anziehung oder seine klebrige, schmierende Eigenschaft ab und verstopft dieses. Im Ergebnis nimmt die Schleifwirkung des Schleifmittels während des Vorgangs rapide ab.

Zur Lösung dieses Problems wurden in der Vergangenheit verschiedene Möglichkeiten vorgeschlagen. So wurden Schleifmittel mit einer antistatischen Beschichtung oder mit einer Stearatschicht überzogen, durch welche eine Anlagerung des Schleifstaubs auf der Oberfläche des Schleifmittels verhindert werden soll. Diese Lösungen erwiesen sich jedoch als nicht optimal.

Es bestand daher der Bedarf an einem verbesserten Schleifmittel, welches bei Oberflächen-Bearbeitungsvorgängen, bei denen viel Schleifstaub erzeugt wird, nicht oder nur in geringem Mass verstopfen.

Es wurde überraschend gefunden, dass diese Aufgabe gelöst wird durch ein Schleifmittel, umfassend als oberste Deckschicht (engl. Top-Coat) eine nanofunktionelle Beschichtung. Es hat sich unerwartet gezeigt, dass eine erfindungsgemässe nanofunktionelle Beschichtung auf einem Schleifmittel gut haftet und auch während der vorstehend genannten Anwendungen keinen sonderlichen Verschleiss durch Abtragung zeigt. Die erfindungsgemässe nanofunktionelle Beschichtung verbleibt somit während des Einsatzes des Schleifmittels entgegen den Erwartungen auf der Oberfläche des Schleifmittels und gewährleistet einen effizienten Schutz vor einem sonst auftretenden Zustopfen.

Im Sinne der vorliegenden Erfindung soll unter einer nanofunktionellen Beschichtung verstanden werden:
a) Eine Beschichtung umfassend Nanopartikel, d.h. Partikel mit einer Partikelgrösse im Bereich von 1 bis 999 nm, vorzugsweise von 1 bis 100 nm und besonders bevorzugt von 20 bis 50 nm; oder
b) Eine Beschichtung mit einer Schichtdicke im Nanometerbereich, d.h. im Bereich von 1 bis 999 nm, vorzugsweise von 1 bis 100 nm und besonders bevorzugt von 20 bis 50 nm; oder
c) Eine Beschichtung mit einer Rauhtiefe im Nanometerbereich, d.h. im Bereich von 1 bis 999 nm, vorzugsweise von 1 bis 100 nm und besonders bevorzugt von 20 bis 50 nm.

Die Rauhtiefe ist die Differenz zwischen maximaler Profilerhebung und Profilvertiefung in der nanofunktionellen Beschichtung. Das Profil zieht sich dabei in einer kontinuierlichen Stärke/Dicke über ein undefiniertes Profil eines klassischen Schleifmittels mit undefinierter Schneide. Zur Betrachtung der Rauhtiefendifferenz ist eine Basislinienkorrektur über die im Vergleich zur Rauhtiefe teilweise viel grösseren, herausragenden Schleifkörner heranzuziehen.

Die vorliegende Erfindung ist dadurch gekennzeichnet, dass auf einem üblichen Schleifmittel umfassend ein Substrat und eine Deckschicht, welche ein Bindemittel und Schleifkorn umfasst, eine oberste (normalerweise zweite) Deckschicht auf die erste Grund-Schicht und die erste Deckschicht aufgebracht ist. Diese oberste Deckschicht ist eine nanofunktionelle Beschichtung wie vorstehend definiert. Sollte die erste Deckschicht in einer Mischung zusammen mit der Grundschicht und dem Korn aufgetragen werden, dann wird die oberste (zweite) Deckschicht sinngemäss zu einer ersten Deckschicht, welche aber die oberste Deckschicht bzw. der Top-Coat bleibt. Auf den erfindungsgemässen Schleifmitteln ist die nanofunktionelle Beschichtung beispielsweise anstelle einer herkömmlichen Stearatbeschichtung vorgesehen. Die vorliegende Erfindung betrifft somit keine Schleifmittel, welche Schleifkörnungen im Nanometerbereich ohne zusätzliche nanofunktionelle Beschichtung aufweisen.

Es hat sich gezeigt, dass durch diese oberste Deckschicht dem Schleifmittel eine verbesserte Antianschmutzwirkung, eine verbesserte Antiabriebwirkung und eine verbesserte Hitzebeständigkeit verliehen werden. Diese Eigenschaften sind in Abhängigkeit von der Beschaffenheit der nanofunktionellen Beschichtung unterschiedlich stark ausgeprägt. So ist die Hitzebeständigkeit insbesondere bei einer obersten Deckschicht gegeben, welche keramische Nanopartikel oder Nanoschichten umfasst. Die Hitzebeständigkeit ist besonders interessant bei Schleifmitteln mit Diamant als Schleifkorn. In diesem Fall wird durch die zweite Deckschicht ein Temperaturschutz für den Diamant bereitgestellt.

Ohne auf eine bestimmte Theorie festgelegt sein zu wollen, wird vermutet, dass die Antianschmutzwirkung der nanofunktionellen Beschichtung gemäss der vorliegenden Erfindung dadurch erreicht wird, dass diese Schicht eine ausreichende Hydrophobie aufweist und/oder noch feiner als der Schleifstaub ist und diesen daher abweisen kann.

Die erfindungsgemässen Schleifmittel umfassen herkömmliche Substrate und herkömmliche Schleifmittelschichten als erste Deckschicht. Geeignete Substrate wie Papier, Schleifmittelgewebe, Vulkanfiber, Folie, Velours usw. sind dem Fachmann hinlänglich bekannt und müssen nicht weiter beschrieben werden.

Die erste Deckschicht enthält das Schleifkorn und ein Bindemittel. Als Bindemittel für die erste Deckschicht kommen sämtliche Bindemittel in Betracht, welche üblicherweise als Bindemittel bei Schleifmitteln eingesetzt werden. Derartige Bindemittel und ihre Herstellung sind dem Fachmann bekannt und müssen hier nicht näher erläutert werden. Beispielhaft seien Phenolharz-Präkondensate, Melaminharze, Harnstoffharze, Polyacrylate, Polyesterpolyole oder weitere handelsübliche Kunstharze als gängige Bindemittel genannt.

Als Schleifkorn können sämtliche herkömmlichen Schleifkornarten eingesetzt werden. Beispielhaft seien genannt: Diamant, c-BN, Al₂O₃ oder SiC. Erfindungsgemäss bevorzugt ist Diamant.

Die Herstellung derartiger Substrate und ihre Beschichtung mit einer Schleifkorn-haltigen Schicht sind wohlbekannt und muss hier nicht näher erläutert werden.

In der Ausführungsform a) umfasst die nanofunktionelle Beschichtung ein Bindemittel und Nanopartikel, d.h. Partikel mit einer Partikelgrösse im Bereich von 1 bis 999 nm, vorzugsweise von 1 bis 100 nm und besonders bevorzugt von 20 bis 50 nm.

Als Bindemittel für diese oberste Deckschicht kommen sämtliche Bindemittel in Betracht, welche üblicherweise als Bindemittel bei Schleifmitteln eingesetzt werden. Derartige Bindemittel und ihre Herstellung sind dem Fachmann bekannt und müssen hier nicht näher erläutert werden. Beispielhaft seien Phenolharz-Präkondensate, Melaminharze, Harnstoffharze, Polyacrylate, Polyesterpolyole oder weitere handelsübliche Kunstharze als gängige Bindemittel genannt.

Nanopartikel und ihre Herstellung sind dem Fachmann ebenfalls bekannt und müssen hier nicht näher erläutert werden. Als Beispiele für Nanopartikel seien genannt: SiO₂-Partikel, Al₂O₃-Partikel, ZrO₂-Partikel oder TiO₂-Partikel(alle gegebenenfalls dotiert mit quartären Ammoniumverbindungen), welche jeweils Partikelgrössen im Nanometerbereich aufweisen.

Bei dieser Ausführungsform kann die oberste Deckschicht Schichtdicken oberhalb des Nanometerbereichs aufweisen, d.h. beispielsweise eine Schichtdicke von mehreren µm aufweisen. Erfindungsgemäss bevorzugt sind Schichtdicken, welche durch eine Auftragmenge von 1-30 g/m², vorzugsweise 5-10 g/m² im Nasszustand, d.h. etwa 2 bis 5 g/m² im Trockenzustand, erhalten werden.

Es ist aber wichtig, dass an der Oberfläche der obersten Deckschicht eine ausreichende Zahl an Nanopartikeln vorhanden ist. Die positiven Effekte der vorliegenden Erfindung stellen sich erst in ausreichendem Mass ein, wenn an der Oberfläche der obersten Deckschicht eine möglichst geschlossene Schicht an Nanopartikeln vorhanden ist. Zu diesem Zweck sind in der ersten Ausführungsform 20-80 Gew.-%, vorzugsweise 50 bis 60 Gew.-% Nanopartikel enthalten.

Die oberste Deckschicht gemäss der ersten Ausführungsform kann auf übliche Weise auf das restliche Schleifmittel aufgetragen werden. Die entsprechenden Beschichtungsmethoden sind dem Fachmann bekannt. Erfindungsgemäss bevorzugt ist eine Beschichtung mittels Walzenauftragsverfahren oder berührungsloser Luftbürstentechnologie.

Die nanofunktionellen Beschichtungen gemäss der zweiten und dritten Ausführungsform (d.h. mit Schichtdicken oder Rauhtiefen im Nanometerbereich) können prinzipiell dadurch hergestellt werden, dass man geeignete Schichtmaterialien in hoher Verdünnung aufträgt und anschliessend trocknet. Nach Entfernung des Lösungsmittels verbleiben Schichten mit Dicken beziehungsweise Rauhtiefen im Nanometerbereich. Als Beschichtungsverfahren kommt hier vorzugsweise die Sprühtechnologie in Frage. Es werden hierbei verdünnte Lösungen mit einem Festkörpergehalt von 5% oder weniger, vorzugsweise 1% bis 0.1% eingesetzt. Man erhält dadurch aufgetragene Schichtmengen im Bereich von 1 bis 20 g/m², vorzugsweise 5 bis 10 g/m² im Nasszustand. Nach Entfernung des Lösungsmittels durch Trocknen werden erfindungsgemässe nanofunktionelle Schichten erhalten. Geht man beispielsweise von einer wässrigen Lösung mit 1% Feststoffgehalt aus und trägt diese in einer Menge von 5 g/m² auf, so erhält man eine trockene Schicht mit einer Dicke von 50 nm.

Bevorzugt wird bei diesen Ausführungsformen die oberste Deckschicht über ein Sol-Gel-Verfahren hergestellt. Die Sol-Gel-Technologie erlaubt die Herstellung der obersten Deckschicht in den gewünschten Dicken beziehungsweise Rauhtiefen, da das in Lösung vorliegende Sol sehr gut aufgetragen werden kann.

Als Ausgangsverbindungen bei der Sol-Gel-Technologie kommen vorzugsweise substituierte Alkoxysilane Rₙ-Si-(O-Alk)₄₋ₙ in Frage, wobei Alk für einen geradkettigen, verzweigten oder cyclischen Alkylrest, R für einen hydrophoben Rest wie beispielsweise einen Alkyl-, Acryl-, Methacryl-, Glycidoxypropyl- oder Perfluoralkylrest und n für eine ganze Zahl von 1 bis 3 steht.

Neben den vorstehend beschriebenen Alkoxysiloxanen kommen auch andere Substanzen im Sinne der vorliegenden Erfindung in Frage, welche ein Sol-Gel-Verhalten zeigen. Beispielsweise seien Aluminate, Titanate, Zirkonate und Mischungen derselben (auch mit den vorstehenden Alkoxysiloxanen) genannt. Dies ergibt die allgemeine Formel Rₙ-M-(O-Alk)₄₋ₙ für M = Si, Ti und Zr, in welcher R und Alk wie vorstehend definiert sind und n für eine ganze Zahl von 1 bis 3 steht, beziehungsweise Rₙ-M-(O-Alk)₃₋ₙ für M = Al, in welcher R und Alk wie vorstehend definiert sind und n für eine ganze Zahl von 1 bis 2 steht.

Grundsätzlich kommen aber alle Substanzen in Frage, welche wie vorstehend beschrieben bei geeigneten Auftragverfahren eine hydrophobe nanofunktionelle Schicht ausbilden können. Als Beispiel seien Schichten auf Acrylatbasis genannt.

Gemäss einer besonders bevorzugten Ausführungsform der vorliegenden Erfindung weisen sowohl das Bindemittel der ersten Deckschicht als auch die Substanz, welche die Nanoschicht ausbildet, funktionelle Gruppen auf, die miteinander zur Reaktion gebracht werden können. Dies ermöglicht eine zusätzliche Verankerung der nanofunktionellen Schicht und somit eine Erhöhung der Abriebbeständigkeit. Bindemittel mit geeigneten funktionellen Gruppen sind beispielsweise Phenolharze. Auf der anderen Seite führt beispielsweise der Einsatz von Substanzen mit freien Hydroxylgruppen wie beispielsweise Aluminaten zu nanofunktionellen Schichten mit funktionellen Gruppen.

Es hat sich überraschend gezeigt, dass mit den Schleifmitteln der vorliegenden Erfindung eine Mehrleistung von etwa 30 bis 40% gegenüber herkömmlichen Schleifmitteln ohne nanofunktionelle Beschichtung möglich ist, da die erfindungsgemässen Schleifmittel deutlich weniger zur Zustopfung neigen.

Das erfindungsgemässe Schleifmittel eignet sich besonders zur Bearbeitung von Oberflächen von Werkstoffen, welche aufgrund ihrer Beschaffenheit bei ihrer Bearbeitung eine signifikante Menge Schleifstaub freisetzen. Derartige Werkstoffe sind insbesondere Werkstoffen aus Holz, MDF- oder HDF-Platten, thermoplastischen oder zähelastischen Lacken, niederschmelzenden, kurzspanigen Metallen oder bestimmten thermoplastischen oder zähelastischen Kunststoffen.

Die vorliegende Erfindung wird nachstehend anhand von nicht einschränkenden Beispielen und Abbildungen genauer erläutert.

Es zeigt:
- Fig. 1: eine herkömmliche Schleifscheibe nach einem Schleifprozess
- Fig. 2: eine erfindungsgemässe Schleifscheibe nach dem gleichen Schleifprozess

### Beispiel 1

Eine erfindungsgemässe Schleifscheibe wurde wie folgt hergestellt: das marktübliche Produkt 1941 siacar der Firma sia wurde in einem dem Fachmann bekannten Prozess zur Herstellung von Schleifmitteln auf Unterlage gefertigt. Dabei wurde auf ein Papier als Unterlage für Schleifmittel mittels Walzenauftrag ein Vollkunstharz oder Phenolharz-Präkondensat aufgetragen, in welches im elektrostatischen Feld das Schleifmineral Aluminiumoxid (Halbedelkorund) aufgebracht wurde. Zur Fixierung wurde das Zwischenprodukt nochmals mittels Walzenauftrag mit einem Vollkunstharz oder Phenolharz-Präkondensat beschichtet. Auf diese intermediäre oder erste Deckschicht wurde nach der Trocknung beziehungsweise Aushärtung eine weitere, oberste Deckschicht mittels Sprühtechnologie aufgetragen. Diese zweite Deckschicht bestand aus einer wässrigen, 2%igen Lösung der acrylathaligen Systeme "FPM210" oder "BOE310-2" des Herstellers Fa. Nanogate, Saarbrücken. Der Nass-Auftrag der obersten Deckschicht betrug ca. 1-10g/m². Bei explizit 4g/m² ergibt dies im trockenen Zustand bei einer 2%igen Lösung eine Schichtdicke von ca. 80nm.

### Vergleichsbeispiel 1

Eine herkömmliche, nicht erfindungsgemässe Schleifscheibe ohne nanofunktionelle Beschichtung wurde wie folgt hergestellt: Es wurde eine Schleifscheibe analog zu Beispiel 1 hergestellt. Allerdings wurde anstatt der in Beispiel 1 aufgetragenen obersten Deckschicht eine handelsübliche wässrige Stearat-Dispersion mittels Walzenauftragstechnologie oder Luftbürstentechnologie aufgetragen.

### Schleifversuche

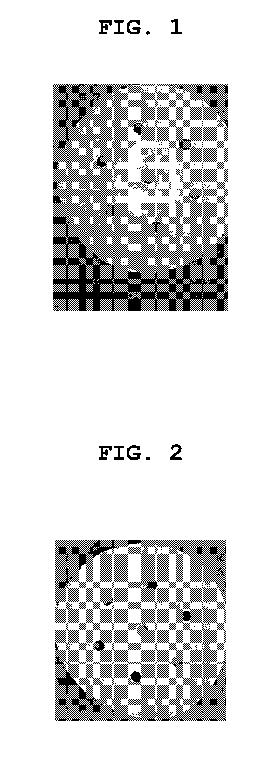

Die Schleifscheiben wurden mit einer Exzenter-Schleifmachine Rupes BR65 AE, Geschwindigkeit Stufe 6 mit 2 kg Anpressgewicht und 5mm Seitenhub, gemäss einer Standard-Prüf-Methode sechsmal für 15 Sekunden geschliffen. Als Prüfkörper bzw. Prüfoberfläche wurde ein handelsüblicher Füller der Fa. Glasurit, Typ 285/60 eingesetzt. Die Ergebnisse sind in den Figuren 1 und 2 dargestellt.

Man erkennt im Vergleich von Fig. 1 mit Fig. 2, dass sich auf der herkömmlichen Schleifscheibe gemäss Vergleichsbeispiel 1 deutlich mehr Schleifstaub abgeschieden hat (Fig. 1) als auf der erfindungsgemässen Schleifscheibe gemäss Beispiel 1 (Fig. 2). Die erfindungsgemässe Schleifscheibe gemäss Beispiel 1 konnte deutlich länger verwendet werden als die schneller zustopfende herkömmliche Schleifscheibe gemäss Vergleichsbeispiel 1. Es ergab sich eine Mehrleistung der Schleifscheibe gemäss Beispiel 1 von über 25%.

## Patentansprüche

1. Schleifmittel, umfassend als oberste Deckschicht eine nanofunktionelle Beschichtung.

2. Schleifmittel nach Anspruch 1, **dadurch gekennzeichnet, dass** die oberste Deckschicht eine Beschichtung umfassend Nanopartikel, d.h. Partikel mit einer Partikelgrösse im Bereich von 1 bis 999 nm, vorzugsweise von 1 bis 100 nm und besonders bevorzugt von 20 bis 50 nm ist.

3. Schleifmittel nach Anspruch 2, **dadurch gekennzeichnet, dass** die Nanopartikel ausgewählt sind aus der Gruppe bestehend aus SiO₂-Partikeln, Al₂O₃-Partikeln, ZrO₂-Partikeln und TiO₂-Partikeln, alle gegebenenfalls dotiert mit quartären Ammoniumverbindungen,.

4. Schleifmittel nach Anspruch 2 oder 3, **dadurch gekennzeichnet, dass** die Nanopartikel in der obersten Deckschicht in einer Menge von 20-80 Gew.-%, vorzugsweise 50 bis 60 Gew.-% enthalten sind.

5. Schleifmittel nach Anspruch 1, **dadurch gekennzeichnet, dass** die oberste Deckschicht eine Beschichtung mit einer Schichtdicke im Nanometerbereich, d.h. im Bereich von 1 bis 999 nm, vorzugsweise von 1 bis 100 nm und besonders bevorzugt von 20 bis 50 nm ist.

6. Schleifmittel nach Anspruch 1, **dadurch gekennzeichnet, dass** die oberste Deckschicht eine Beschichtung mit einer Rauhtiefe im Nanometerbereich, d.h. im Bereich von 1 bis 999 nm, vorzugsweise von 1 bis 100 nm und besonders bevorzugt von 20 bis 50 nm ist.

7. Schleifmittel nach Anspruch 5 oder 6, **dadurch gekennzeichnet, dass** die oberste Deckschicht aus substituierten Alkoxysilanen der Formel
Rₙ-Si-(O-Alk)₄₋ₙ
hergestellt ist, wobei
Alk für einen geradkettigen, verzweigten oder cyclischen Alkylrest,
R für einen hydrophoben Rest wie beispielsweise einen Alkyl-, Acryl-, Methacryl-, Glycidoxypropyl- oder Perfluor-alkylrest, und
n für eine ganze Zahl von 1 bis 3 steht.

8. Schleifmittel nach Anspruch 5 oder 6, **dadurch gekennzeichnet, dass** die oberste Deckschicht aus Aluminaten, Titanaten, Zirkonaten der allgemeinen Formel
Rₙ-M- (O-Alk)₄₋ₙ
wobei M = Si, Ti und Zr und für eine ganze Zahl von 1 bis 3 steht,
oder der allgemeinen Formel
Rₙ-Al-(O-Alk)₃₋ₙ
mit n=1 oder 2
wobei R, Alk jeweils die in Anspruch 7 angegebenen Definitionen haben, und Mischungen derselben untereinander oder mit den Alkoxysilanen gemäss Anspruch 7 hergestellt ist.

9. Schleifmittel nach Anspruch 5 oder 6, **dadurch gekennzeichnet, dass** die oberste Deckschicht aus einer hydrophoben Schicht auf Acrylatbasis besteht.

10. Schleifmittel nach einem der Ansprüche 5 bis 9, **dadurch gekennzeichnet, dass** sowohl das Bindemittel der ersten Deckschicht als auch die Substanz, welche die Nanoschicht ausbildet, funktionelle Gruppen aufweisen, die miteinander zur Reaktion gebracht werden können.

11. Schleifmittel nach Anspruch 10, **dadurch gekennzeichnet, dass** das Bindemittel ein Phenolharz und die zweite Schicht eine Substanz mit freien Hydroxylgruppen wie beispielsweise Aluminate umfasst.

12. Schleifmittel nach einem der Ansprüche 1 bis 11, **dadurch gekennzeichnet, dass** die nanofunktionelle Beschichtung keramische Nanopartikel oder Nanoschichten umfasst.

13. Schleifmittel nach einem der Ansprüche 1 bis 12, **dadurch gekennzeichnet, dass** das Schleifkorn ausgewählt ist aus der Gruppe bestehend aus Diamant, c-BN, Al₂O₃ oder SiC.

14. Verfahren zur Herstellung eines Schleifmittels gemäss einem der Ansprüche 1 bis 13, **dadurch gekennzeichnet, dass** auf ein Substrat umfassend eine erste Deckschicht aus Bindemittel und Schleifkorn eine nanofunktionelle Beschichtung als oberste Deckschicht aufgebracht wird.

15. Verfahren nach Anspruch 14, **dadurch gekennzeichnet, dass** die zweite Deckschicht über ein Walzenauftragsverfahren oder berührungsloser Luftbürstentechnologie aufgebracht wird.

16. Verfahren nach Anspruch 14, **dadurch gekennzeichnet, dass** die oberste Deckschicht über Sprühverfahren aufgebracht wird.

17. Verfahren nach Anspruch 16, **dadurch gekennzeichnet, dass** die oberste Deckschicht über ein Sol-Gel-Verfahren bereitgestellt wird.

18. Verwendung einer nanofunktionellen Beschichtung gemäss einem der Ansprüche 1 bis 13 zur Herstellung eines Schleifmittels.

19. Verwendung eines Schleifmittels gemäss einem der Ansprüche 1 bis 13 zur Bearbeitung von Oberflächen von Werkstoffen aus Holz, Lack, Metall oder Kunststoffen.
